# EUROPEAN PATENT APPLICATION

(11) **EP 0 853 911 A1**
(43) Date of publication of application: **22.07.1998**
(21) Application number: 97300210.8
(22) Date of filing: 15.01.1997
(51) Int. Cl.: A47J 45/06

(54) **Handles**

(71) Applicant: LE CREUSET S.A., F-02230 Fresnoy-Le-Grand (FR)
(72) Inventor: Bower, John, Yemassee, Sount Carolina 29945 (US)
(74) Representative: Findlay, Alice Rosemary

(57) **Abstract**

A foldable handle which is lockable in a given orientation. A holdable member (2) is pivotally attached to a mounting member (12) and can be moved from a folded position to a locked position where it is held between a latch (15,16) and a stop member (15,16) formed on the holdable or mounting members (2,12).

## Description

This invention relates to handles and more particularly to a folding handle which is lockable in a predetermined position.

It is often preferable for a rigid handle of an article to be pivotally mounted to the article so it can be folded down when not required. When the handle is upright it can significantly increase the volume occupied by an article and therefore a foldable handle in advantageous for storage or transportation purposes, for example. However, if a handle is pivotal it may reduce the control the user has over the article when holding it and the handle may be unstable.

This instability is particularly undesirable when using a kettle for example as it can lead to spillage of hot water. Also, a handle which extends over the top of the body of the kettle is prone to fold during pouring as the body of the kettle will tend to swing round the pivotal axis of the handle.

A kettle having a foldable handle is currently marketed by the Applicants. A separate clip is sold with the kettle which is inserted to hold the handle in its upright position. Whilst generally satisfactory this may be inconvenient for the user and there is also a risk the clip may be lost if it is subsequently removed and the kettle handle folded down.

The present invention provides a handle comprising a mounting member for attaching the handle to a body, a holdable member pivotally attached to the mounting member about an axis, and a latch projecting from one member towards the other, the holdable member being pivotal from a folded position, so as to move the latch on said one member past said other member, to a locked position in which the latch and a stop member prevent rotation of the holdable member relative to the mounting member about the axis. Accordingly, an integral locking mechanism is included in the handle, without requiring any separate components.

Preferably, the action of moving the handle towards its locked position engages a cam surface on the latch with the member moving relative to the latch, or alternatively a cam surface is provided on the member itself which moves past the latch, with one member being resiliently flexible in each case. The relevant member is therefore more readily moved past the latch and as it moves beyond the latch a definite "click" can be produced, so the handle is positively located in the locked orientation.

As one member is preferably resiliently flexible, the holdable member can be returned to the folded position by bending the resilient member away from the other to allow the latch to pass. The stop member may also be a latch so the handle can be folded towards either side of the pivotal axis.

The handle of the invention can assist in ensuring that a kettle, in particular, complies with the relevant British, European and International safety standards.

The invention will now be described by way of example and with reference to the accompanying schematic drawings wherein:
Figure 1 is a side view of a known folding handle configuration; and
Figures 2 and 3 are partial perspective views of a folding handle of the invention, in folded and upright positions, respectively.

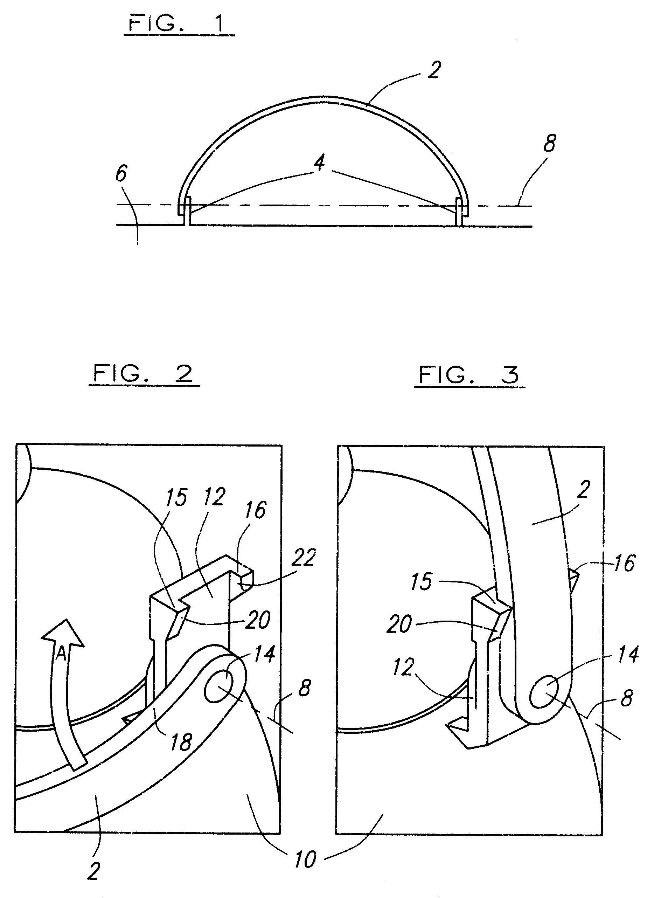

In the known folding handle configuration shown in Figure 1, the holdable member 2 is pivotally mounted to two upstanding mounts 4 of the article 6. The holdable member is pivotal about an axis 8.

Part of a folding handle in accordance with the invention is shown in Figures 2 and 3. One end of a holdable member 2 is illustrated attached to the body of a kettle 10. A mounting member 12 is push-fitted over a bracket (not shown) integral with the kettle and held in position by an axial pin 14 lying on the axis 8 and passing through the holdable member 2, the mounting member 12 and the bracket. A pair of latches 15 and 16 are formed on the mounting member 12. The other end of the holdable member 2 may be fitted to the kettle 10 in an identical manner, or the mounting member 12 at the other end may be replaced by a similar member without the latches. Alternatively, the other end may be unattached.

The operation of the handle of the invention will now be described. The handle is pivotal from the folded position shown in Figure 2 by moving it in the direction of arrow A. This brings the side 18 of the holdable member 2 into contact with the latch 15. As the holdable member 2 moves further, it rides up the cam surface 20 of the latch 15. The mounting member 12 is formed of a durable but resiliently flexible material, such as resin, and therefore bends away from the holdable member 2 to allow it to pass. As soon as the holdable portion moves beyond the latch 15, the mounting member snaps back to its original position, giving a positive indication that the handle is now locked.

Movement of the holdable member is prevented by the abutting surfaces of the latches. This surface 22 of the latch 16 can be seen in Figure 2. The planes of the abutting surfaces and the corresponding surfaces of the holdable member 2 are preferably oriented perpendicular to the direction of movement of the holdable member.

The holdable member 2 can be returned to the folded position by pushing the resilient mounting member 12 away therefrom, so the holdable member can move past either latch 15 or 16.

It will be appreciated that the features of the locking mechanism can be configured in various ways as appropriate. For example, a latch, a stop member, or both, or two latches may be provided on the holdable member 2, rather than on the mounting member 12. The holdable member 2 may extend further below the axis 8 and have one of these combinations of features formed on this distal end which engage the sides of the mounting member 12.

## Claims

1. A handle comprising a mounting member (12) for attaching the handle to a body (10), a holdable member (2) pivotally attached to the mounting member (12) about an axis (8), and a latch (15,16) projecting from one member (2,12) towards the other (2,12), the holdable member (2) being pivotal from a folded position, so as to move the latch (15,16) on said one member (2,12) past said other member (2,12), to a locked position in which the latch (15,16) and a stop member (15,16) prevent rotation of the holdable member (2) relative to the mounting member (12) about the axis (8).

2. A handle according to Claim 1 wherein a cam surface (20) is provided on the latch (15,16) to assist the other member (2,12) in moving past the latch (15,16), one of the members (12) being resiliently flexible.

3. A handle according to Claim 1 wherein a cam surface is provided on the member (2,12) which is engageable with the latch (15,16) to assist the member (2,12) moving past the latch (15,16), one of the members being resiliently flexible.

4. A handle according any preceding Claim wherein both the latch (15,16) and the stop member (15,16) are provided on the same member (2,12).

5. A handle according to Claim 4 wherein both the latch (15,16) and the stop member (15,16) are provided on the distal end of the mounting member (12).

6. A handle according to any preceding Claim wherein the stop member (15,16) is a latch (15,16).

7. A handle according to Claim 6 wherein a cam surface (20) is provided on both latches (15,16).

8. A kettle (10) comprising a handle according to any preceding Claim.
